# EUROPEAN PATENT APPLICATION

(11) **EP 2 535 448 A1**
(43) Date of publication of application: **19.12.2012**
(21) Application number: 11170457.3
(22) Date of filing: 17.06.2011
(51) Int. Cl.: D04C 1/12, A01K 91/00

(54) **Composite fishing line**

(71) Applicant: Yao I Fabric Co., Ltd., Chang-Hwa Hsien (TW)
(72) Inventor: Yang, Tsung Pei, Chang-Hwa Hsien (TW)
(74) Representative: Chaillot, Geneviève

(57) **Abstract**

The present invention discloses a composite fishing line (1) manufactured by braiding eight bundles of fibers selected from two different types of fibers, one being a high molecular-weight polyethylene fiber (2) and the other being a high molecular-weight expanded polytetrafluoroethylene (ePTFE) fiber (3), such that the composite fishing line has the properties of both high molecular-weight polytetrafluoroethylene (PTFE) fibers and polyamide fibers to improve the strength, wear-resistance, cross-sectional roundness, and water resistance of the high-performance fishing line and achieve the effect of reducing the diameter of the fishing line.

## Description

### FIELD OF THE INVENTION

The present invention relates to a composite fishing line, in particular to a composite fishing line manufactured by weaving high molecular-weight polyethylene fibers and high molecular-weight expanded polytetrafluoroethylene (ePTFE) fibers, high molecular-weight polytetrafluoroethylene (PTFE) fibers or polyamide fibers.

### BACKGROUND OF THE INVENTION

As fishing methods advance in recent years, fishers have increasingly stricter requirements on a high-performance fishing line, and these requirements include high water resistance, toughness, wear resistance, pulling force, impact resistance and elasticity as well as lightweight and low elongation.

In general, a fishing line usually comes with water resistance, since the fishing line is dipped in water for a long time or rubbed with a fishing reel and a guide ring very often. If the fishing line does not come with the water-resisting property, the fishing line will absorb much water to increase the weight of the fishing line and affect the performance of the fishing line after it is dipped in water for long. Further, the fishing line should have the properties of high toughness and wear resistance to prevent the fishing line from being worn or broken by the fishing reel and guide ring after a long time of use. Further, the fishing line should have high pulling force and impact resistance to prevent the fishing line from being broken by a strong pulling force. Further, the weight of the fishing line should be light to provide a convenient carry. Further, the fishing line should have a high elasticity for preventing the fishing line from being tangled to the fishing reel easily and a low elongation for giving a more significant signal of a bite and a better response for fishing. Further, the fishing line can be thrown farther from the fishing pole if the fishing line has a better cross-sectional roundness and a smoother surface.

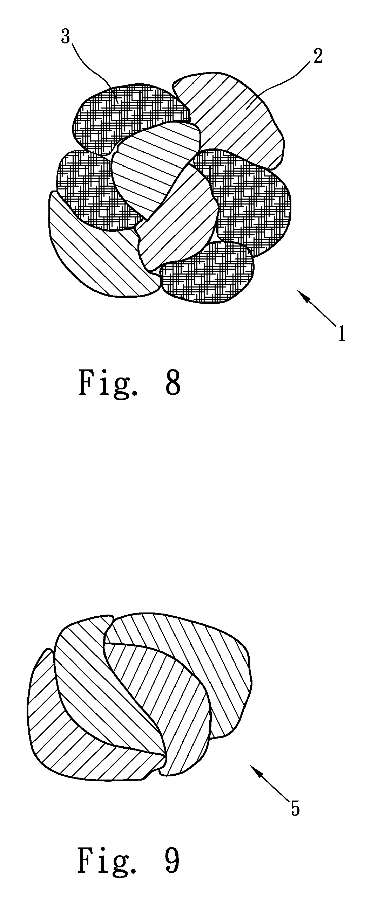

With reference to FIG. 9 for a cross-sectional view of a conventional fishing line, the conventional fishing line (5) is made of super high molecular-weight polyethylene fibers, and DYNEEMA is a famous trademark of the fibers of this type available in the market, and these fibers are manufacturing by spinning a polymer solution of the high molecular-weight polyethylene to form gel-fibers, removing the solvent, and pulling or extending one or more bundles of fibers to produce the final fibers. These fibers are bundled into yarns with different denier numbers and used for different applications. The DYNEEMA fibers can be used for manufacturing fishing lines having the advantages of high pulling force, elasticity, and toughness as well as low elongation.

### SUMMARY OF THE INVENTION

In the structure disclosed above, the fishing line is manufactured by pulling or extending a plurality of DYNEEMA fibers to form a plurality of singlets, and bundling the singlets into the fishing line.

However, the pulling force of the fishing line with singlets is very limited, and the cross-sectional roundness is poor, and the throwing distance of the fishing line from the fishing pole is short. Obviously, the overall structure of the aforementioned fishing line requires improvements, and thus the inventor of the present invention provides an innovative composite fishing line to overcome the shortcomings of the conventional fishing line.

The composite fishing line of the present invention is made by cross-weaving eight bundles of fibers selected from two different types of fibers, one being a high molecular-weight polyethylene fiber and the other being a high molecular-weight expanded polytetrafluoroethylene (ePTFE) fiber, a high molecular-weight polytetrafluoroethylene (PTFE) fiber or a polyamide fiber. With the aforementioned components, the composite fishing line made of the two types of fibers can have the properties of both fibers to improve the strength, wear resistance, cross-sectional roundness and water resistance of the high-performance fishing line, and achieve the effects of reducing the diameter of the fishing line, so as to provide an improved and convenient fishing line structure.

Therefore, it is a primary objective of the present invention to provide a composite fishing line manufactured by cross-weaving eight bundles of fibers selected from two different types of fibers, one being a high molecular-weight polyethylene fiber and the other being a high molecular-weight expanded polytetrafluoroethylene (ePTFE) fiber, high molecular-weight polytetrafluoroethylene (PTFE) fiber or polyamide fiber, and the composite fishing line made of these two types of fibers has the properties of both fibers and achieves the effects of improving the strength, wear resistance and water resistance of the fishing line.

A second objective of the present invention is to provide a composite fishing line manufactured by weaving different types of fibers, and the composite fishing line has a small diameter to reduce its weight to lower the friction and improve the wear resistance by reducing the diameter of the fishing line.

A third objective of the present invention is to provide a composite fishing line that embeds concave and convex flange surfaces to provide at least 32 woven entanglement points per inch, such that the fishing line has a higher weaving density to improve the strength of the fishing line.

A fourth objective of the present invention is to provide a composite fishing line with a high cross-sectional roundness and a streamline design to increase the throwing distance of the fishing line.

An object of the invention is therefore a composite fishing line, comprising:
four to seven bundles of first fibers, made of high molecular-weight polyethylene fibers;
one to four bundles of second fibers, the second fibers being made of high molecular-weight expanded polytetrafluoroethylene (ePTFE) fibers or of high molecular-weight polytetrafluoroethylene (PTFE) fibers or of polyamide fibers, and eight bundles of fibers selected from the first and second fibers being cross-woven into the composite fishing line.

### BRIEF DESCRIPTION OF THE DRAWINGS

FIG. 1 is a perspective view of a first preferred embodiment of the present invention;
FIG. 2 is a partial enlarged view of a first preferred embodiment of the present invention;
FIG. 3 is a first cross-sectional view of a first preferred embodiment of the present invention;
FIG. 4 is a second cross-sectional view of a first preferred embodiment of the present invention;
FIG. 5 is a third cross-sectional view of a first preferred embodiment of the present invention;
FIG. 6 is a cross-sectional view of a second preferred embodiment of the present invention;
FIG. 7 is a cross-sectional view of a third preferred embodiment of the present invention;
FIG. 8 is a cross-sectional view of a fourth preferred embodiment of the present invention; and
FIG. 9 is an enlarged cross-sectional view of a prior art.

### DETAILED DESCRIPTION OF THE PREFERRED EMBODIMENTS

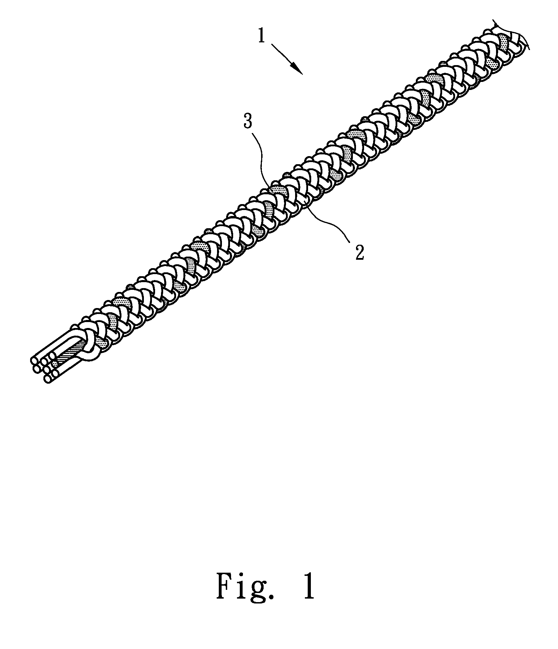

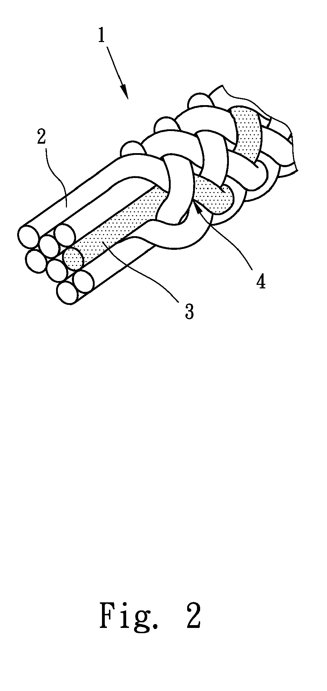

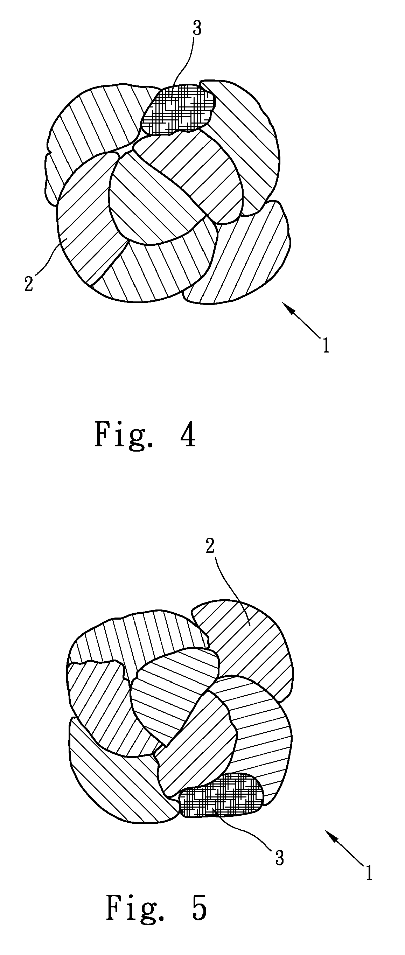

With reference to FIGS. 1 to 5 for a composite fishing line (1) of the present invention, the composite fishing line (1) comprises a plurality of first fibers (2) and second fibers (3).

The first fibers (2) are made of high molecular-weight polyethylene fibers such as DYNEEMA fibers with different denier numbers and significantly high molecular weight of 400,000, and the first fibers (2) are manufactured by spinning a polymer solution of high molecular-weight polyethylene to form the gel fibers, removing the solvent, and pulling or extending one or more bundles of fibers to form the final fibers. The first fibers (2) have the advantages of the high pulling force, elasticity, and roughness as well as the light weight and low elongation.

The second fibers (3) are super-fine fibers made of high molecular-weight expanded polytetrafluoroethylene (ePTFE) fibers, such as GORE fibers available in the market, and the second fibers (3) has the advantages of high strength, water resistance and wear resistance, and the second fibers (3) are slightly harder than the first fibers (2), and the first fibers (2) can provide the softness, and the second fibers (3) can provide the appropriate hardness and toughness.

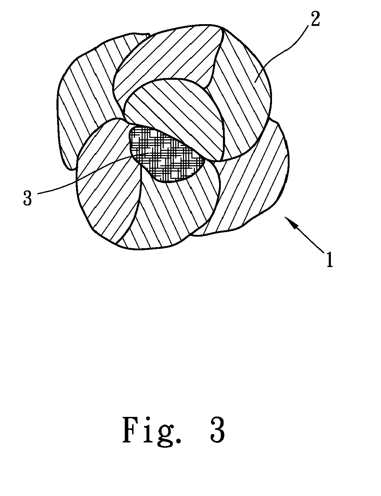

With reference to FIGS. 3 to 5 for different cross-sectional views of a first preferred embodiments of the present invention after actual tests are taken, seven bundles of the first fibers (2) and one bundle of the second fibers (3) are cross-woven into a composite fishing line (1) whose cross-sectional shape is substantially circular, and has a higher weaving density, and the fishing line with a smaller diameter can be woven, and the composite fishing line has at least 32 woven entanglement points (4) per inch. With the properties of both first fibers (2) and second fibers (3), the strength, wear resistance and water resistance of the composite fishing line (1) can be improved, and the cross-sectional roundness and streamline of the overall structure can be enhanced to increase the throwing distance of the fishing line from the fishing pole.

With the aforementioned components, the composite fishing line (1) is manufactured by cross-weaving seven bundles of the first fibers (2) and one bundle of the second fibers (3), and the properties of both fibers can improve the strength, wear resistance, water resistance and cross-sectional roundness of the fishing line. In addition, the fishing line can have a smaller diameter to achieve the effect of improving the performance of the composite fishing line (1).

To further elaborate the structural characteristics, the technical measures, and expected effects of the present invention, preferred embodiments are described in details as follows:
In the present invention, seven bundles of the first fibers (2) and one bundle of the second fibers (3) are cross-woven into the composite fishing line (1), and the composite fishing line (1) has at least 32 woven entanglement points (4) per inch.
In the present invention, seven bundles of the first fibers (2) and one bundle of the second fibers (3) are cross-woven into the composite fishing line (1), and the composite fishing line (1) has the properties of both types of fibers, wherein the first fibers (2) have the advantages of high strength, toughness and wear resistance, and the GORE fibers (3) have higher hardness and better water resistance, such that the composite fishing line (1) has the effects of improving the strength, wear resistance and water resistance. In addition, the first fibers (2) and second fibers (3) are super fine fibers, and thus a fishing line with a small diameter can be woven to reduce the weight of the fishing line. Concave and convex flange surfaces are embedded, such that the fishing line contains at least 32 woven entanglement points (4) per inch, and provides a higher weaving density to improve the strength of the fishing line and the small diameter can reduce the friction when the fishing line rubs with the fishing reel and the guide ring, so as to achieve the effects of improving the wear resistance and the strength as well as reducing the diameter to further improve the wear resistance of the fishing line.

The composite fishing line (1) of the present invention is manufactured by cross-weaving the first fibers (2) and the second fibers (3), such that the cross-sectional roundness and the streamline of the fishing line can be improved to increase the distance of throwing the fishing line from a fishing pole.

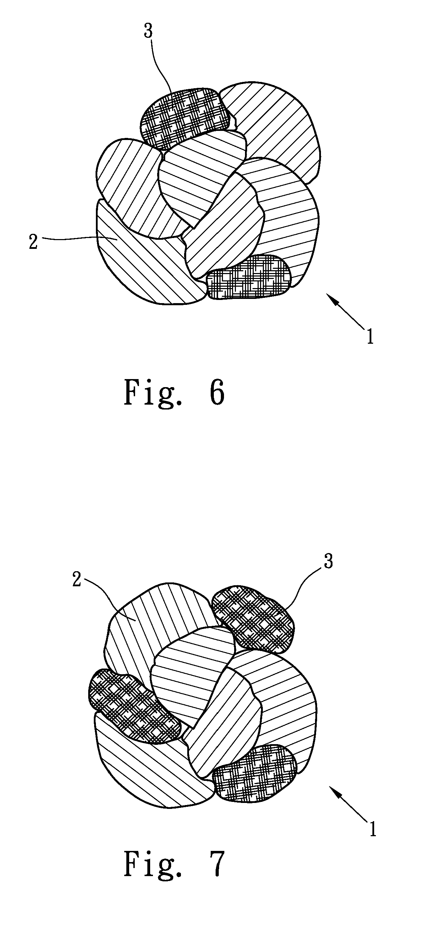

With reference to FIG. 6 for a second preferred embodiment of the present invention, a composite fishing line of the present invention is manufactured by cross-weaving six bundles of the first fibers (2) and two bundles of the second fibers (3). With reference to FIG. 7 for a third preferred embodiment of the present invention, a composite fishing line of the present invention is manufactured by cross-weaving five bundles of the first fibers (2) and three bundles of the second fibers (3). With reference to FIG. 8 for a fourth preferred embodiment of the present invention, a composite fishing line of the present invention is manufactured by cross-weaving four bundles of the first fibers (2) and four bundles of the second fibers (3) to achieve the same effects of the present invention as described above.

The second fibers (3) can be made of other materials instead, such as high molecular-weight polytetrafluoroethylene (PTFE) fibers or polyamide fiber (including Kevlar and Technola fibers).

In summation of the description above, the composite fishing line of the present invention is manufactured by the first fibers (2) made of high molecular-weight polyethylene fibers and the second fiber (3) made of other high molecular-weight expanded polytetrafluoroethylene (ePTFE) fibers, high molecular-weight polytetrafluoroethylene (PTFE) fibers or polyamide fibers, such that the composite fishing line (1) manufactured by weaving and entangling the first and second fibers (2), (3) have the features of both types of the fibers to achieve the effects of reducing the diameter, improving the strength, wear-resistance, water-resistance, and cross-sectional roundness of the high-performance fishing line.

## Claims

1. A composite fishing line, comprising:
four to seven bundles of first fibers, made of high molecular-weight polyethylene fibers;
one to four bundles of second fibers, the second fibers being made of high molecular-weight expanded polytetrafluoroethylene (ePTFE) fibers or of high molecular-weight polytetrafluoroethylene (PTFE) fibers or of polyamide fibers, and eight bundles of fibers selected from the first and second fibers being cross-woven into the composite fishing line.

2. The composite fishing line as claimed in claim 1, wherein the composite fishing line includes 32 woven entanglement points per inch.

3. The composite fishing line as claimed in claim 2, wherein the second fibers are being made of polyamide fibers and the polyamide fiber is a Kevlar fiber of a Technola fiber.
